# EUROPEAN PATENT SPECIFICATION

(11) **EP 4 254 107 B1**
(45) Date of publication and mention of the grant of the patent: **17.09.2025**
(21) Application number: 23166281.8
(22) Date of filing: 03.04.2023
(51) Int. Cl.: G05B 19/418, E04H 7/30, G05B 19/4097

(54) **OPTIMIZED PRODUCTION METHOD BASED ON 3D MODEL**
OPTIMIERTES HERSTELLUNGSVERFAHREN AUF BASIS EINES 3D-MODELLS
PROCÉDÉ DE PRODUCTION OPTIMISÉ BASÉ SUR UN MODÈLE 3D

(30) Priority: 01.04.2022 BE 202205242
(43) Date of publication of application: 04.10.2023
(73) Proprietor: Silbloxx bv, 8810 Lichtervelde (BE)
(72) Inventor: Vanparys, Andy, 8810 Lichtervelde (BE); Vanparys, Francky, 8810 Lichtervelde (BE)
(74) Representative: Brantsandpatents bv

(56) References cited:
- EP-A1- 3 335 843
- EP-A1- 3 722 900
- WO-A1-2022/011166
- US-A1- 2019 244 309
- US-A1- 2020 201 303

## Description

### FIELD OF THE INVENTION

The present invention relates to a method for the production of silos based on designs.

In a second aspect, the present invention also relates to a system for the production of silos based on designs.

### BACKGROUND

Silos are elements found in all processing and cleaning facilities in the food industry. Silos come in a wide variety of shapes (round or angular, standing horizontal or vertical) and can be constructed from a number of different materials. In dry processes, a risk analysis must be done in order to define the requirements for design and material of the silo.

For the production of silos many different elements, often in different materials should be combined. Some materials should be bent or cut. A problem is that during the production of silos waste is produced. Some parts are cut on specific lengths, based on a specific order or design. The leftovers are often thrown away, which is both economically and ecologically unwanted.

Several different elements are welded together for the construction of a silo. For free flow of the product along the silo wall and for cleanability, it is advantageous to install only those fittings that are absolutely necessary inside a silo. The welding seams on the silo body should be smooth and easy to clean. A good welding seam harbors only small amounts of the product on the edges; therefore, no treatment is necessary, saving the costs associated with treating the surfaces of welding seams.

The paints chosen must be able to withstand moist atmosphere exposure conditions, for example a two-coat finish system. Some types of paint require low temperatures (wet paints) or high temperatures (powder coating). Different parts require different treatment. It is unwanted for the painting equipment to alternate frequently between different methods of painting.

The present invention aims to provide a solution to at least some of the problems and disadvantages mentioned above.

### SUMMARY OF THE INVENTION

The present invention relates to a method for the production of silos according to claim 1.

This method has the advantage, inter alia, that the method comprises a step in which the number of steps required for the production of an order is analyzed by means of a computerized algorithm. A silo comprises several parts. The parts are gathered, welded and painted in a factory. The computerized algorithm directs a gathering robot arm, a welding robot arm and a painting robot arm. If several similar parts required for different designs, the algorithm can direct the gathering robot arm to gather an optimal amount of this specific parts. As a result, fewer gathering tasks are required and less energy is required. This is advantageous from both an economic and ecological point of view. After gathering, the parts are welded by a robot, so that the welding seams are smooth and easy to clean, without a labor-intensive step. The order in which several painting tasks are preformed, is also optimized by the algorithm. In addition to the computerized algorithm, Ultrawideband (UWB) technology can be used to enhance the efficiency of the production process. By attaching one or more tags to the parts and utilizing UWB technology, the exact location of each part can be tracked throughout the production process. This enables the gathering robot arm, welding robot arm, and painting robot arm to accurately locate and interact with each part, resulting in a more precise and efficient production process. Additionally, the use of UWB can reduce the likelihood of errors and increase the overall quality of the final silo. Preferred embodiments of the method are shown in any of the claims 2 to 9.

In a second aspect, the present invention relates to a system according to claim 10.

More particular, the system as described herein provides a system for the production of silos based on designs. This system reduces the ecological pressure caused by the production of silos and optimizes the use of the robot arms, leading to economic advantages. The computerized algorithm is suitable to direct a gathering robot arm, a welding robot arm and a painting robot arm. If several similar parts required for different designs, the algorithm can direct the gathering robot arm to gather an optimal amount of this specific parts. As a result, fewer gathering tasks are required and less energy is required. This is advantageous from both an economic and ecological point of view. After gathering, the parts are welded by a robot, so that the welding seams are smooth and easy to clean, without a labor-intensive step. The order in which several painting tasks are preformed, is also optimized by the algorithm. In addition to the computerized algorithm, the system also comprises anchor devices and at least one tags in combination with UWB technology to further optimize the production process. By attaching a tag to each part and utilizing UWB technology, the exact location of each part can be tracked throughout the production process. This enables the gathering robot arm, welding robot arm, and painting robot arm to accurately locate and interact with each part, resulting in a more precise and efficient production process. The use of UWB technology also reduces the likelihood of errors and increases the overall quality of the final product. Furthermore, the system can collect data on the production process using UWB technology, which can be analysed to further optimize the production process and improve efficiency. This combination of the computerized algorithm, UWB technology, results in a highly efficient and environmentally friendly system to produce silos. Preferred embodiments of the method are shown in any of the claims 11 to 15.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

"A", "an", and "the" as used herein refers to both singular and plural referents unless the context clearly dictates otherwise. By way of example, "a compartment" refers to one or more than one compartment.

In a first aspect, the invention relates to a method for the production of silos based on designs using an algorithm, wherein, the algorithm directs a gathering robot arm to gather one or more parts necessary for the production of the silo; and wherein the algorithm directs a welding robot arm to weld at least some of the parts together; and wherein the algorithm directs a painting robot arm to paint at least some of the parts; and wherein the algorithm optimizes the directions for the gathering robot arm, the welding robot arm and the painting robot; wherein the method further uses an ultra-wide band (UWB) technology for managing the parts in real time; wherein the method further comprises a step wherein the parts are associated to one or more ultra-wide band (UWB) tags, and comprising the step of monitoring a position of the one or more UWB tags via the UWB technology, wherein the algorithm directs at least one of the gathering robot arm and/or the welding robot arm and/or the painting robot arm based on said position.

This method has the advantage, inter alia, that the method comprises a step in which the number of steps required for the production of an order is analyzed by means of a computerized algorithm. A silo comprises several parts. The parts are gathered, welded and painted in a factory. The computerized algorithm directs a gathering robot arm, a welding robot arm and a painting robot arm. If several similar parts required for different designs, the algorithm can direct the gathering robot arm to gather an optimal amount of this specific parts. As a result, fewer gathering tasks are required and less energy is required. This is advantageous from both an economic and ecological point of view. After gathering, the parts are welded by a robot, so that the welding seams are smooth and easy to clean, without a labor-intensive step. The order in which several painting tasks are preformed, is also optimized by the algorithm.

In an embodiment, the first step is the design of the silo. A user allows his configuration according to his needs to be evaluated by the algorithm. the algorithm provides the user also a 3D model to incorporate in his virtual building and a unique offer with a time estimate. If the customer is satisfied with the offer and model, and confirms the offer, the planning of the silo will be placed definitely in the automatic planning and scheduling tool. In a particularly preferred embodiment, the algorithm determines the necessary parts for the production of the silo based on the design. In an embodiment, the algorithm determines which materials and quantity thereof are required. In an embodiment, the translation from the design to the actual tasks is done by the algorithm, which will deconstruct the silo into its parts and parts configuration. It also estimates the costs. In an embodiment, the design is in the form of 3D drawing of the silo. In an embodiment, the design is in the form of 2D drawing of the silo, in the form of a parameter set, in the form of a building materials list, etc.

In an embodiment, the gathering robot arm is an Automated Guided Vehicle. In an embodiment, the gathering robot arm is an Automated Guided Vehicle suitable to bring parts from a warehouse to the welding robot arm.

In a particularly preferred embodiment, the algorithm has access to a warehouse stock system, comprising information about the location and quantity of different parts. Because the algorithm has access to a warehouse stock system, the algorithm can evaluate which parts and in which quantities something should be ordered. Not too many, nor too few materials and parts will be available for the smooth construction of the silos.

In an embodiment, the algorithm will order the material, plan the delivery, create a picking order to the carts, and then run the production processes up to storage in the outgoing storage. Because of this evaluation, all parts can be ordered simultaneously by the algorithm. In an embodiment, the algorithm will evaluate more than one offer before ordering the parts necessary for the construction of the silos.

In an embodiment, goods, materials or parts which arrive, are labeled and scanned. In a further embodiment, the label is a tracer emitting radio signals, suitable for the algorithm to track the location of said goods, materials or parts at all times during the production process. In an embodiment, the algorithm optimizes the usage of the different parts and the ordering of new parts. The algorithm is suitable to determine the needed parts for the construction of the requested silos in the orders. By comparing the needed parts with the available stock, an improved order can be placed, thereby optimizing the ordering of new parts. The algorithm furthermore optimizes the use of available parts. For example, if a rectangular piece needs to be cut, the cut can be made in such a way that the other part of the piece can be used for another application.

Once all a planning is determined, it must be executed. In an embodiment, the system according to this invention takes in the different orders and tracks if the steps get executed correctly, on time and according quality standards. The algorithm will collect all data with sensors. Such data comprises data about the status of the materials and parts, allowing for a track and tracing at all times into deep details ensuring quality standards.

Using kits, all needed parts are assembled to one moveable cart. This will be used throughout the process to maintain the completeness of a piece. In an embodiment, each kit cart has a RTLS tag which follows each step in the process. This allows the operator to have minimal interactions with external systems as the correct data can be displayed using position-based rules.

In a particularly preferred embodiment, the algorithm evaluates the gathering robot arm, the welding robot arm and/or the painting robot arm. In a particularly preferred embodiment, the algorithm evaluates the gathering robot arm. Tracking of said tag enables the algorithm to control production. If the correct kit gets rolled into production by the gathering robot arm, the correct work cell will light up. If a wrong operator or a wrong kit is near a gathering robot arm, the algorithm can register that this isn't the correct place or person, and display this to the operator or gathering robot arm, with corrective actions. In an embodiment, the algorithm will suggest correcting measures.

In an embodiment, the kit gets rolled by the gathering robot arm to the welding robot arm. In an embodiment, the kit gets rolled to the first welding robot arm to be assembled. Here only smooth walls get pre-processed as there are the only parts which have U-profiles. Here preparation welds are made to make the kit structural correct but not functional robust. After the pre-processing is done, the kit-cart gets placed into a buffer zone waiting to be placed into the second welding robot arm.

In an embodiment, the second welding robot arm fits the appropriate caliber, to ensure a correct welding position. In combination of the adjustments of the welding robot program, the second welding robot arm will be ready for production. After the part is pre-processed the full welding process can begin. The kit gets rolled to the second welding robot arm which welds all the joints for a functional robust piece. After this is done, the part gets buffered until ready to paint all parts of the project or similar paint jobs in one run. In an embodiment, the algorithm can also direct custom parts to be made. Manual welding additions must be made when custom parts are requested. This can be done after the automatic welding process on a separate working bench.

In an embodiment, the painting robot arm is part of an automatic painting line which allows the parts to be powder coated and/or wet painted and dried. The painting robot arm is suitable to apply a powder coat and/or wet paint, operating in two different ways, albeit low temperature paint for wet paints or high temperature for powder coating. Important here is that the correct side is placed, where the outside or slot welded plate can be either powder coated or wet painted and the inner side can be either powder coated or wet painted depending on the storage production. This procedure is set up in two different flows for each painting option. Primary procedure is the powder coating. All parts that need to have at least one coat of powder coating will be processed in bulk. After the bulk of the powder coating, the wet coat can be done in bulk.

In an embodiment, the parts are fitted with Radio-frequency identification (RFID) tags which allow to track the current position. This allows to know at critical points where a part is and which parameters are used for that part.

In a particularly preferred embodiment, the algorithm directs an arranging robot arm to arrange the welded parts and/or the painted parts for each order in separate packs. In an embodiment, the painted parts get stacked in packs. The number of parts in one pack varies depending on what the transportation will be, but is preferably of 7, 8 or 11. In an embodiment, the walls get stacked with wooden blocks in between and a strip steel is placed around the package. Each stack gets an information label and gets stored in stock. Preferably the stocking is placed in order of shipping, thus the lowest parts of the silo first stocked in order to easily be placed on the transportation. The completion of all parts of a project means it can be shipped, before shipping these all get stored in the storage area. Shipping can be done by one or more containers or lorries. In an embodiment, the algorithm limits storage to a minimum.

In a particularly preferred embodiment, the algorithm optimizes the directions for the gathering robot arm, the welding robot arm and the painting robot arm by conducting steps comprising: separating at least two designs in gathering, welding and painting tasks; evaluating which tasks can be combined or grouped; generating a planning for the directions for the robot arms based on the evaluation. Because the algorithm evaluates the different designs and separates them into different steps, the algorithm is suitable to develop an optimal production planning. The directions the algorithm sends to the robot arms are therefore more optimal and reduce the downtime of the factory.

In an embodiment, the method is suitable for the production of cuboid silos, horizontal silos or tower silos. Cuboid silos with a horizontal bottom often cannot be fully emptied. Also, the right angles at the corners are not easily cleaned. Additional pieces, for example metal plates in the corners, can allow for better cleaning and better emptying. Horizontal silos are not normally utilized for bulk material, since they cannot be emptied; tower silos are another option.

In an embodiment, the silos comprise of pressure valves, vacuum flaps, seals manholes and/or sensors. Silos can be equipped with pressure release valves and vacuum flaps. The flap itself could be in the form of a small disc or large plate. How these systems are mounted to the silo and what types of gaskets are used in these areas are of particular interest for cleanability. Often, flanges create recesses and shelves where the product can accumulate and eventually stagnate, if not removed. All equipment used for emptying the product from the silo could be superfluous if the mass flow characteristics of the substance are known. However, this can be determined through laboratory analysis. If more than one product is stored in a silo, the characteristics of the flow could vary so that additional equipment is necessary to fully empty the silo. None of the equipment available on the market can be easily cleaned. It can be dismantled prior to cleaning and cleaned according to special procedures. Sensors, such as fill level measuring devices, should also be chosen with cleanability in mind. Versions with cables and wires cannot be cleaned. Ultrasonic or gravimetric techniques are preferred. Gravimetric detection with load cells on the outside of the silo does not affect cleanability. Manholes and sensors also require static seals and often possess crevices, which allow the product to accumulate. Their gaskets are preferably flushed with the product side of the silo wall or they are preferably regularly dismantled for cleaning.

In a preferred embodiment, the method to build a silo employs the use of a UWB RTLS (Ultra-Wide Band Real Time Location System). This system is a type of positioning system that operates similarly to GPS but instead of relying on signals from satellites, it utilizes short-distance radio communication between nearby devices. The UWB RTLS therefore functions as a local positioning system.

To utilize the UWB RTLS, anchor devices (sensors/beacons) are installed in fixed locations, much like the satellites in GPS. These anchor devices are typically placed in the corners of the zone that need to be monitored or other strategic locations around the production floor, such as near entry and exit points, and at important junctions within the production process, most particularly for this case at each processing unit, such as the robot arms. Additionally, UWB tags are utilized in this system. These UWB tags are placed on the parts that move around and need to be monitored. The UWB tags can be provided, for example, on the movable cart and/or on the parts to build the silo. This UWB tag can be attached to the part in a variety of ways, depending on the nature of the part, and how it is moved around the production floor. The UWB tags can receive signals from, and send replies back to, the anchor devices.

For 3D positioning, a minimum of three anchor devices and one UWB tag is required. In theory, as little as 2 anchor devices would suffice, under the assumption that the tags are fixed in height position (for instance, fixed height on the movable cart). All the anchor devices and UWB tags function like a constantly scanning radar. By measuring the length of time it takes for a packet of data to perform a round trip between an anchor and a UWB tag, the system can calculate where the UWB tag must be. This is also called the time of flight. Knowing the time of flight between two devices allows for the determination of the distance between them. By knowing the distance between the UWB tag and the anchor devices, the precise location of the UWB tag can be calculated, using a process called trilateration. Trilateration relies on the distances to three fixed points to determine the location.

Alternatively, the method can use "passive" tags, these emit periodical UWB signals, which are picked up by the anchor devices, and processed, using the Time Difference of Arrival (TDoA) to determine the position of the tag with respect to the anchor devices.

The UWB RTLS system can rely on accurate measurements of distance between the UWB tag and the anchor devices when using Two-Way Ranging, or can use TDoA to accomplish this. By utilizing this method, the location of an object can be determined in real-time, making it a valuable tool in the construction of a silo.

An advantage of using UWB technology in the method for constructing a silo is the high level of accuracy that can be achieved. UWB technology has a high degree of precision, allowing for location tracking within 100 cm, preferably within 90 cm, preferably within 80 cm, preferably within 70 cm, preferably within 60 cm, preferably within 50 cm, preferably within 40 cm, preferably within 30 cm, preferably within 20 cm, preferably within 10 cm, preferably within 5 cm, preferably within 1 cm, more preferably within 0.5 cm, and most preferably within 0.1 cm. This level of accuracy is particularly important in the construction of a silo, where precision is required to ensure that the different parts are assembled correctly. Since the UWB technology provides such accurate location tracking, it can be used to trigger actions based on the position of diverse parts needed to construct the silo.

Furthermore, the UWB RTLS system is capable of providing precise and accurate location data for all components and essential devices on the production floor. This allows for the identification of potential bottlenecks in the manufacturing process, which can be crucial for maintaining efficient production. Additionally, the collected data from the RTLS can be used to trigger location-based actions that are dependent on the positioning of the components and the number of parts in a specific area. By doing so, the system can help streamline the manufacturing process and avoid potential delays or errors. Moreover, the data obtained from the RTLS can be evaluated to determine the flow of the production process and identify any potential obstacles that may be affecting its overall efficiency. This information can then be used to adjust and optimize the production process accordingly. Using an advanced algorithm, the system can evaluate the data collected from the RTLS and identify any bottlenecks in the manufacturing process. The algorithm can then implement various optimizations to improve the efficiency of the production process, such as adjusting the speed and direction of robotic arms or relocating materials to reduce processing time. By combining the UWB technology and triangulation of distinct anchors, the system provides a powerful tool for tracking components and devices and optimizing the manufacturing process. Ultimately, the system can accurately provide location data, identify bottlenecks, and implement optimizations to enhance the overall efficiency of the production process.

The term "anchor device" or "anchors" should be understood as radiofrequency (RF) readers that deploy in fixed positions to detect and locate signals from transmitting UWB tags and devices. For example, in environments like smart factories, businesses will use anchors in real-time location systems to detect and locate transmitting tags carried by workers, powering critical safety use cases such as collision avoidance or safety zoning. They'll also track tags attached to key assets like production equipment, vehicles, and inventories to support enterprise asset management, automation, workflow optimization and more. To accurately determine real-time location, anchors, deployed in fixed positions, will concurrently detect signals from transmitting tags within their communication range. The anchors read and timestamp these received signals, also known as location blinks and forward this data to software to determine tag positions using advanced TDoA methodology and anchor synchronization. Those coordinates can be used to visualize the location of a tracked entity on an indoor map of the monitored zone or integrated into various external IoT applications.

The term "UWB tag" or "tag" should be understood as wireless devices that is provided on objects or any physical things to digitally track their real-time location and movements throughout large facilities or localized areas. For example, in environments like factories and warehouses related to silo's, businesses will use tags in a real-time location system to digitally track relevant parts of the silo, powering critical safety use cases such as collision avoidance or safety zoning. They'll also track key assets like production equipment, vehicles and inventories to enable enterprise asset management, automation, workflow optimization, paperless facilities and more. When attached to a tracked entity, the UWB tags will send out data encoded signals at continuous intervals. These repeating signals, also known as location blinks, are received by anchor devices within the communication range of the transmitting tag. Anchor devices will then send the received data to the central location engine to calculate the tag's real-time positions. Those coordinates can be used to visualize the location of the tracked entity on an indoor map of the monitored zone or integrated into various external applications. UWB tags come in all shapes and sizes, from heavy-duty, industrial-grade asset tags, to beacons, ID badges, and more. Using modular components like RTLS modules and chips, organizations can also create custom tags with proprietary designs that meet their unique needs and technical requirements. UWB tags leverage various radio-frequency technologies suited for different use cases.

In an embodiment, the method comprises a step of providing a movable cart with one or more UWB tags, suitable for tracking the location of the movable cart. The UWB tag can be affixed to the cart itself, allowing it to be tracked in real-time as it moves around the production floor. As the movable cart moves around the production floor, preferably, the UWB tag emits a signal that is picked up by the anchor devices. The computing device then triangulates the signal from the different anchor devices to determine the precise location of the cart. This allows the real-time tracking of the cart and any part it contains, without the need for manual handling or tracking. Since the cart can move freely around the production floor, it can be difficult to track its location and monitor its movements. However, by equipping the cart with a UWB tag, it can be accurately tracked in real time. This means that the system can provide real-time updates on the location of the cart, allowing operators to locate it quickly and easily when needed. For example, if the movable cart enters a certain area of the production floor, it could trigger the start of a particular production process or alert a robot to take a specific action. This not only saves time, but also ensures that the production process is as efficient and streamlined as possible. For example, this allows an operator to have minimal interactions with external systems as the correct data can be displayed using position based rules. The flow allows if a movable cart gets rolled into production, that the correct work cell will light up. If a wrong operator or a wrong kit is in a workcell, the workcell can register that this isn't the correct place or person and display this to the operator with corrective actions.

By providing a tag on the movable carts, the system can track the carts, which themselves provide for the only transport possibility for the parts in the system (except very localized transport during processing steps, such as welding or painting). As such, by tracking the carts, the parts are essentially tracked themselves. By providing anchor devices at strategic positions, for instance at or near processing units such as the gathering robot arm, the welding robot arm and/or the painting robot arm, these can accurately detect and recognize carts, and thereby determine which parts are present on the cart. Based on this information, the arms can process the parts based on the instructions.

In a preferred embodiment, the method comprises a step of providing the parts with an identification code. The identification code comprises preferably an optically readable code, for example in the form of a barcode, QR code, chip, RFID (Radio Frequency Identification) tag or a combination thereof. The identification code is suitable for comprising any data related to the part on which the identification code is provided. By using these identification codes, each part can be easily and accurately tracked, and data related to that specific part can be linked to the code. This contributes to efficient processing and accurate material traceability. Furthermore, the use of identification codes will provide increased safety and security because they cannot be easily counterfeited or forged.

Preferably, there are several ways to attach an identification code to a part, depending on the material of the part and the requirements for identification. A simple way to attach an identification code to part is to use a label that is stuck to the part. Another way to attach an identification code to a part is by stamping. This can be done using a stamp set, where the code is manually stamped on the part. This method is durable and ensures that the identification code cannot be removed or damaged. It is also possible to apply an identification code to a part via laser marking. This is done using a laser that engraves the code on the part. This method is permanent and durable and ensures that the identification code cannot be removed or damaged. Laser marking is also very accurate and can be applied to different types of materials. It is important to use the correct identification code and make sure it is attached correctly. This can help track the contents of the part and tracks it during transport and storage.

In an embodiment, the method comprises a step wherein based on the UWB tags, the location of the parts is determined. This allows for seamless tracking of the components throughout the manufacturing process, which can be beneficial in identifying potential delays or issues that may arise. In addition, the method also incorporates the use of an identification code that is assigned to each part. This code contains pertinent information related to the part, including the part number, part name, material type, material thickness, and finish type, among others. By scanning the identification code, the system can obtain vital data that can be utilized to control the gathering robot arm and/or the welding robot arm and/or the painting robot arm. Based on the scanned data, in combination with the location of the parts, the system can control the robot arms to perform the desired actions, including gathering the parts, welding the parts, or painting the parts, among others. This level of precision and accuracy is vital in ensuring that the manufacturing process is efficient, streamlined, and error-free. The use of UWB tags and identification codes provides a number of advantages to the manufacturing process. For instance, the UWB tags offer highly accurate and precise location data that can be used to optimize the flow of the production process. The identification codes, on the other hand, provide critical information related to the parts, which can be used to ensure that the right parts are used at the right time, thereby minimizing errors and delays. Additionally, the method also provides greater flexibility and scalability to the manufacturing process. By employing the UWB tags and identification codes, the system can easily adapt to changes in the production process, such as adding or removing parts, or altering the sequence of assembly. This ensures that the manufacturing process remains efficient and adaptable, even in the face of changing demands or requirements.

In a preferred embodiment, the identification code on a part of a silo can contain a wide variety of information related to the part, including: the part number, this is a unique number assigned to the part, which can be used to identify and track it throughout the manufacturing process. Additionally, a part name, this is a descriptive name for the part, which can be useful for quickly identifying it during assembly or maintenance. It also can contain information relating to the material, for example, the material type such as steel, aluminium, or plastic; the material thickness, which can be important for ensuring structural integrity and durability. Also information related to the finish type can be integrated in the identification code. This contains information about the type of finish applied to the part, such as paint, powder coating, or galvanization. Next up, the code can also obtain information about the manufacturing process, such as the manufacturing date, the manufacturing location, assembly instructions for example any special instructions or notes related to the assembly of the part, which can be useful for ensuring that the part is installed correctly. It can also contain information related to quality control data and any data related to quality control inspections, such as inspection dates, inspector names, and inspection results. By including this information in the identification code, it can be quickly and easily accessed and used to ensure that the right part is used correctly and safely.

In an embodiment, the method comprises a step of associating an identification code of a part to an UWB tag on a cart when said part is provided onto said cart, wherein the algorithm directs at least one of the gathering robot arm and/or the welding robot arm and/or the painting robot arm based on said associated identification code and UWB tag. This control system can be programmed with an algorithm that uses the associated identification code and UWB tag to direct each robot arm to the appropriate location and task. For example, when a part is provided onto the cart with the UWB tag, the algorithm can direct the gathering robot arm to retrieve the part and deliver it to the welding robot arm for assembly. Once the part is welded, the algorithm can direct the painting robot arm to apply the appropriate finish. Preferably, the robots can also communicate with each other directly through sensors and feedback mechanisms. For instance, the welding robot arm can send a signal to the painting robot arm to indicate that a particular part has been welded and is ready for painting. This can help to ensure that the manufacturing process proceeds smoothly and efficiently, with each robot arm performing its designated task in a coordinated manner.

In a particular embodiment of the invention, the combination of using UWB tags and optically readable codes, such as QR codes for instance, allows the system to track groups of parts via the tags, and at the same time keep tabs on the individual parts via the QR codes. This way, by associating parts to (and disassociating parts from) a tag - meaning the identification code is associated to the UWB tag - they can be tracked/traced throughout the compound, without having to provide each part with an UWB tag (which can easily be destroyed, damaged or otherwise made inoperable during handling of the parts). By providing readers capable of detecting such identification codes at fixed points (for instance at a loading station where the parts are provided onto carts, or at points where parts may be unloaded, such as at the robot arms), the system can keep track of the cart on which the part is provided, by associating the identification code to the UWB tag.

In an embodiment, the gathering robot arm, the welding robot arm, and the painting robot arm are each equipped with a UWB anchor. Once the UWB RTLS system is set up and running, the robot arms can be programmed to move autonomously within their designated work area, with their location known and preferably fixed. For example, the gathering robot arm can be directed to move to the appropriate position to retrieve the necessary parts, which can then be delivered to the welding robot arm for assembly. The welding robot arm can then weld the parts together at the designated location. Equipping the painting robot arm with a UWB anchor allows for precise identification and location of critical points required for painting a particular part, along with the necessary parameters for each point. This enables the painting robot arm to paint the part with the highest level of accuracy and efficiency, ensuring a high-quality finish.

In another or further embodiment, the movable cart and/or the parts are equipped with UWB tags, while the gathering robot arm, welding robot arm, and painting robot arm are equipped with UWB anchors. While UWB tracing has margin of error and lag, the control units of each arm have precise knowledge of the arm's movements and spatial occupation. The UWB tag on the movable cart and/or parts can for example communicate with the gathering robot arm to ensure that the parts are loaded onto the cart in the correct location. The cart can then be transported to the designated welding location, where the UWB anchor on the welding robot arm can be used to precisely identify the location of the parts and weld them together with high accuracy. To enable a precise and efficient painting process, the painting robot arm can be equipped with a UWB anchor to identify and locate critical points necessary for painting. By utilizing UWB tags and anchors, the robot arms can quickly locate and gather necessary parts, reducing the time required for assembly and increasing overall production efficiency. The robot arms can accurately detect the location of other equipment and parts and adjust their movements accordingly to avoid collisions. Additionally, unique identification codes assigned to each part by UWB technology can help to enhance traceability and quality control throughout the manufacturing process, identifying any defects or issues that may arise and enabling prompt corrective action.

In an embodiment, to ensure the efficient use of the robot arms, the algorithm conducts several steps to optimize the directions for the gathering robot arm, welding robot arm, and painting robot arm. These steps include separating at least two designs in gathering, welding, and painting tasks, evaluating which tasks can be combined or grouped, and generating a plan for the directions of the robot arms based on this evaluation. By optimizing the movements of the robot arms, the algorithm ensures that each arm is used to its full potential, minimizing the time required for production. Additionally, the algorithm determines the necessary parts for the production of the silo based on the design and directs the gathering robot arm to collect these parts. The welding robot arm is responsible for welding at least some of the parts together, while the painting robot arm is responsible for painting at least some of the parts. Furthermore, the algorithm directs an arranging robot arm to arrange the welded parts and/or painted parts for each order in separate packs. The algorithm also has access to a warehouse stock system, which comprises information about the location and quantity of different parts. By optimizing the usage of the different parts and the ordering of new parts, the algorithm can minimize waste and ensure that the required parts are available. Furthermore, the process incorporates UWB technology. This will allow the location of the cart to be tracked in real-time, ensuring that it is always in the right place at the right time. In addition to this, the algorithm can also be programmed to evaluate the performance of the gathering robot arm, welding robot arm, and/or painting robot arm, using data collected from the anchors (for example sensors) and other sources. The algorithm can use this data to optimize the usage of the different parts and even the ordering of new parts, ensuring that the production process is always running smoothly and efficiently. By optimizing the directions of the robot arms, determining the necessary parts for production, and evaluating the performance of the robot arms, this method ensures that the silo is constructed quickly and accurately, meeting the requirements of the client.

In an embodiment, UWB RTLS technology can be used with a variety of communication protocols and tags, including the IEEE 802.15.4z standard and UWB-enabled tags such as Decawave DWM1001 and DWM1004, Qorvo DW1000, and NXP Kinetis KW41Z. These tags typically use UWB pulses to accurately measure distances and determine the location of other UWB-enabled devices in the vicinity. Additionally, UWB technology can be integrated with other communication protocols such as Bluetooth and Wi-Fi for enhanced functionality.

In a second aspect, the invention relates to a system for the production of silos based on designs comprising: a computing device, suitable to run an algorithm; a gathering robot arm, suitable to gather one or more parts necessary for the production of the silo; a welding robot arm, suitable to weld at least some of the parts together; and a painting robot arm, suitable to paint at least some of the parts, characterized in that, the gathering robot arm, welding robot arm and painting robot arm are connected to the computing device and are suitable to follow directions from the computing device, and wherein the directions are optimized by the algorithm; wherein system further comprises UWB technology for managing the parts in real time, at least three anchor devices and at least one UWB tag associated to at least one of the parts, wherein said anchor devices are configured for detecting the UWB tags and determining by the computing device the position of said UWB tag based on said detections, and wherein said computing devices instructs the gathering robot arm, welding robot arm and/or painting robot based on said position.

This system reduces the ecological pressure caused by the production of silos and optimizes the use of the robot arms, leading to economic advantages. The computerized algorithm is suitable to direct a gathering robot arm, a welding robot arm and a painting robot arm. If several similar parts required for different designs, the algorithm can direct the gathering robot arm to gather an optimal amount of this specific parts. As a result, fewer gathering tasks are required and less energy is required. This is advantageous from both an economic and ecological point of view. After gathering, the parts are welded by a robot, so that the welding seams are smooth and easy to clean, without a labor-intensive step. The order in which several painting tasks are preformed, is also optimized by the algorithm.

In a particularly preferred embodiment, the algorithm is suitable to optimize the directions for the gathering robot arm, the welding robot arm and the painting robot arm based on parameters comprising delivery time and production efficiency. Because the algorithm is suitable to optimize the directions for the robot arms, less energy, time and materials are wasted. The algorithm analyzes the designs of the silos that should be produced, determines all tasks required for the production of said silos and analyses if certain tasks can be grouped or combined. By grouping and/or combining certain tasks, a more optimal production planning can be drafted. In an embodiment, the gathering task comprises to gather at least some of the necessary parts for the production of the silo. In an embodiment, the welding task comprises to weld at least some of the necessary parts for the production of the silo together. In an embodiment, the painting task comprises to paint at least some of the necessary parts for the production of the silo.

In a particularly preferred embodiment, the system further comprises an arranging robot arm, suitable to arrange the welded parts and/or the painted parts for each design separately. In an embodiment, the arranging robot arm is suitable to stack the painted parts in packs. The number of parts in one pack varies depending on what the transportation will be, but is preferably of 7, 8 or 11. In an embodiment, the arranging robot arm stacks the parts with wooden blocks in between and/or a strip steel is placed around the package. Each stack gets an information label and gets stored in stock.

In a particularly preferred embodiment, the system further comprises a movable cart, suitable to transport different parts necessary for the production of the silo to the gathering robot arm. In an embodiment, the gathering arm is attached onto the movable cart. In an embodiment, the movable cart is suitable to drive through a storage area where incoming materials and parts are stored. In an embodiment, the movable arm is suitable to bring necessary parts and materials to the welding arm.

In a particularly preferred embodiment, the movable cart comprises a tag, suitable to emit radio waves. In an embodiment, the parts are fitted with Radio-frequency identification (RFID) tags which allow to track the current position. This allows to know at critical points where a part is and which parameters are used for that part.

In an embodiment, the system comprises UWB technology and triangulation of different beacons. To enable the real time tracking of all assets on the production floor, the choice has been made to set up a Real Time Locating System (RTLS) in communication with the computing device. This allows tracking of assets without any manual handling. By the use of UWB technology and triangulation of different beacons, a location can be established within 50 cm. This allows that an asset can trigger actions based on their position, amount of assets in a certain field, and can collect data on the flow of the production process thus discovering bottlenecks. The algorithm can evaluate these bottlenecks. In an embodiment, the algorithm implements optimalizations, suitable to remove these bottlenecks. In an embodiment, each robot arm comprises a touchscreen, in connection with the computing device, which allows an operator to interact with the production process. This enables to display the correct work drawings, SOP's, but also enables to inform a supervisor in case of problems. As well as interactions that are needed for registration of quality tests, or other inputs that are not possible yet to do automatically. This in combination with the RTLS system allows to personalize the work environment to the operator and his tasks.

In an embodiment, a Supervisory Control and Data Acquisition (SCADA) platform is connected to the touchscreens and the computing device. This allows communication with the system in reading and writing updates. This allows to display to the operator's progress in a day, but also on project basis; increasing the engagement in the full scope of a project or product, of the operator; as well as enabling direct feedback of his actual work.

In an embodiment, each part or kit will be supplied with a QR code. Behind this QR code is a weblink which depending on the user that logs in, shows its relevant information. For an operator this information can be the next step in the process. For a supervisor this will be the overall data and KPI's of this part or kit. For an end customer this will be the building instructions on where this part or kit belongs in the full building scope.

In an embodiment, the system provides an offer and technical details about a silo design, as well as an estimated delivery date. This allows the current production to be planned as well as providing information for a future planning, resulting in a time estimate for the customer. The time estimate will be reserved for an amount of time, guaranteeing the time line. Once the time has passed, this will need to be replanned. If the customer agrees with the offer. The production drawings, production parameters and instructions will be generated by the configurator software as well as a fixed end date planning for the production. Here follows that the material purchase gets planned, order dates get planned, and if required shifts, and people. The planning tool allows for different parameters to be set. These parameters or heuristics allow to optimize the planning on tardiness, delivery on time, people optimalization, etc. The production planning allows to foresee what is planned for the near future but gives an overview of what is happening right now. If an unexpected event such as a breakdown should happen, the algorithm can adjust the planning dynamically.

In a particularly preferred embodiment, the system further comprises a cutting robot arm, suitable to cut a metal part into a part needed for the design and a part not needed for the design, and wherein the computing device is suitable to evaluate if the not needed part for the design can be used in other designs. For the production of silos many different elements, often in different materials should be combined. Some materials should be bent or cut. A problem is that during the production of silos, waste is produced. Some parts are cut on specific lengths, based on a specific order or design. The leftovers are often thrown away, which is both economically and ecologically unwanted. In an embodiment, the algorithm is suitable to evaluate if the part not needed for the design, can be used in other designs.

In an embodiment, the system comprises UWB technology for managing the parts in real time. The system comprises at least three anchor devices and at least one UWB tag associated to at least one of the parts. Said anchor devices are configured for detecting the UWB tags and determining by the computing device the position of said UWB tag based on said detections, and wherein said computing devices instructs the gathering robot arm, welding robot arm and/or painting robot based on said position. The use of at least three anchor devices and at least one UWB tag is based on the principles of trilateration, which is a technique for determining the relative position of an object using the distances between it and three or more fixed points. In theory, as little as two anchor devices would suffice, under the assumption that the tags are fixed in height position (for instance, fixed height on the movable cart).

For 3D positioning, a minimum of three anchor devices and one UWB tag is required. In this embodiment of three anchor devices, each anchor device is placed at a known location within the working area, and each UWB tag is attached to a part that needs to be managed in real time. By measuring the time it takes for the UWB signal to travel between the tag and each anchor, the system can calculate the distance between the tag and each anchor. Using this information, the system can then determine the location of the tag in three-dimensional space by using trilateration. By having at least three anchors, the system can calculate the tag's position with sufficient accuracy for managing the parts in real time. Furthermore, having multiple anchors helps to improve the accuracy and reliability of the system by reducing the impact of obstacles and environmental factors on the signal. Overall, the use of at least three anchors and at least one tag is an effective and efficient way to manage and track the location of parts in real time using UWB technology.

A skilled person is aware that the method according to the first aspect is preferably conducted with a system according to the second aspect and that the system according to the second aspect is configured for the execution of a method according to the first aspect. Each embodiment or characteristic, disclosed in this document, above and below, therefore relates to each of the four aspects of this invention.

## Claims

1. A method for the production of silos based on designs using an algorithm, **characterized in that**, the algorithm directs a gathering robot arm to gather one or more parts necessary for the production of the silo; and wherein the algorithm directs a welding robot arm to weld at least some of the parts together; and wherein the algorithm directs a painting robot arm to paint at least some of the parts; and wherein the algorithm optimizes the directions for the gathering robot arm, the welding robot arm and the painting robot arm; wherein the method further uses an ultra-wide band (UWB) technology for managing the parts in real time; wherein the method further comprises a step wherein the parts are associated to one or more ultra-wide band (UWB) tags, and comprises the step of monitoring a position of the one or more UWB tags via the UWB technology, wherein the algorithm directs at least one of the gathering robot arm and/or the welding robot arm and/or the painting robot arm based on said position.

2. Method according to claim 1, wherein, the method comprises a step of providing a movable cart with one or more UWB tags, suitable for tracking the location of the movable cart.

3. Method according to claim 1 or 2, wherein, the method comprises a step of providing the parts with an identification code, wherein the identification code comprises preferably an optically readable code, more preferably a QR code, which identification code is suitable for comprising any data related to the part on which the identification code is provided, wherein said identification code is read and registered at predetermined positions, preferably at or near the the gathering robot arm and/or the welding robot arm and/or the painting robot arm.

4. Method according to any of the claim 3, wherein the method comprises a step wherein based on the UWB tags, the location of the parts is determined, wherein the identification code can be scanned to obtain scanned data, and wherein based on the scanned data in combination with the location of the parts, the gathering robot arm and/or the welding robot arm and/or the painting robot arm can be controlled to perform a desired action.

5. Method according to any of the claims 3-4, comprising a step of associating an identification code of a part to an UWB tag on a cart when said part is provided onto said cart, wherein the algorithm directs at least one of the gathering robot arm and/or the welding robot arm and/or the painting robot arm based on said associated identification code and UWB tag.

6. Method according to any of the claims 1-5, wherein, the algorithm optimizes the directions for the gathering robot arm, the welding robot arm and the painting robot arm by conducting steps comprising: separating at least two designs in gathering, welding and painting tasks; evaluating which tasks can be combined or grouped; generating a planning for the directions for the robot arms based on the evaluation.

7. Method according to any of the claims 1-6, wherein, the algorithm determines necessary parts for the production of the silo based on the design, preferably wherein the algorithm has access to a warehouse stock system, comprising information about the location and quantity of different parts.

8. Method according to any of the claims 1-7, wherein the algorithm directs an arranging robot arm to arrange welded parts and/or painted parts for each order in separate packs.

9. Method according to claim 8, wherein the algorithm optimizes usage of different parts and orders new parts accordingly.

10. A system for the production of silos based on designs comprising: a computing device, configured to run an algorithm; a gathering robot arm, configured to gather one or more parts necessary for the production of the silo; a welding robot arm, configured to weld at least some of the parts together; and a painting robot arm, configured to paint at least some of the parts, **characterized in that**, the gathering robot arm, welding robot arm and painting robot arm are connected to the computing device and are configured to follow directions from the computing device, and wherein the directions are configured to be optimized by the algorithm; wherein system further comprises UWB technology for managing the parts in real time, at least three anchor devices and at least one UWB tag associated to at least one of the parts, wherein said anchor devices are configured for detecting the UWB tags and determining by the computing device the position of said UWB tag based on said detections, and wherein said computing devices is configured to instruct the gathering robot arm, welding robot arm and/or painting robot based on said position.

11. System according to claim 10, wherein the algorithm is configured to optimize the directions for the gathering robot arm, the welding robot arm and the painting robot arm based on parameters comprising delivery time and production efficiency.

12. System according to claim 10 or 11, wherein the system further comprises an arranging robot arm, configured to arrange welded parts and/or painted parts for each design separately.

13. System according to any of the claims 10-12, wherein the system further comprises a movable cart, configured to transport different parts necessary for the production of the silo to the gathering robot arm, wherein the movable cart comprises a tag, configured to emit radio waves.

14. System according to any of the claims 10-13, wherein the system further comprises a cutting robot arm, configured to cut a metal part into a part needed for the design and a part not needed for the design, and wherein the computing device is configured to evaluate if the not needed part for the design can be used in other designs.

15. System according to any of the previous claims 10-14, configured to conduct a method according to any of the claims 1-9.

## Patentansprüche

1. Verfahren zur Produktion von Silos, basierend auf Gestaltungen unter Verwendung eines Algorithmus, **dadurch gekennzeichnet, dass** der Algorithmus einen zusammentragenden Roboterarm zum Zusammentragen von einem oder mehreren Teilen lenkt, die für die Produktion des Silos notwendig sind, und wobei der Algorithmus einen schweißenden Roboterarm lenkt, um zumindest einige der Teile zusammenzuschweißen, und wobei der Algorithmus einen Farbe auftragenden Roboterarm lenkt, um zumindest auf einige der Teile Farbe aufzutragen, und wobei der Algorithmus das Lenken des zusammentragenden Roboterarms, des schweißenden Roboterarms und des Farbe auftragenden Roboterarms optimiert, wobei das Verfahren ferner eine Ultrabreitband- (UWB-) Technologie zum Verwalten der Teile ein Echtzeit verwendet, wobei das Verfahren ferner einen Schritt umfasst, in dem die Teile einem oder mehreren Ultrabreitband- (UWB-) Kennzeichen zugeordnet werden, und den Schritt des Überwachens einer Position des einen oder der mehreren UWB-Kennzeichen mittels der UWB-Technologie umfasst, wobei der Algorithmus mindestens einen von dem zusammentragenden Roboterarm und/oder dem schweißenden Roboterarm und/oder dem Farbe auftragenden Roboterarm basierend auf der Position lenkt.

2. Verfahren nach Anspruch 1, wobei das Verfahren einen Schritt des Versehens eines beweglichen Wagens mit einem oder mehreren UWB-Kennzeichen umfasst, das/die dafür geeignet ist/sind, die Position des beweglichen Wagens nachzuverfolgen.

3. Verfahren nach Anspruch 1 oder 2, wobei das Verfahren einen Schritt des Versehens der Teile mit einem Identifizierungscode umfasst, wobei der Identifizierungscode vorzugsweise einen optisch lesbaren Code und bevorzugter einen QR-Code umfasst, wobei der Identifizierungscode dafür geeignet ist, beliebige Daten bezüglich des Teils zu umfassen, das mit dem Identifizierungscode versehen ist, wobei der Identifizierungscode gelesen und an festgelegten Stellen verzeichnet wird, vorzugsweise an oder nahe dem zusammentragenden Roboterarm und/oder dem schweißenden Roboterarm und/oder dem Farbe auftragenden Roboterarm.

4. Verfahren nach Anspruch 3, wobei das Verfahren einen Schritt umfasst, in dem basierend auf den UWB-Kennzeichen die Position der Teile bestimmt wird, wobei der Identifizierungscode gescannt werden kann, um gescannte Daten zu gewinnen, und wobei basierend auf den gescannten Daten in Kombination mit der Position der Teile der zusammentragende Roboterarm und/oder der schweißende Roboterarm und/oder der Farbe auftragende Roboterarm gesteuert werden können, um eine gewünschte Aktion auszuführen.

5. Verfahren nach einem der Ansprüche 3 bis 4, einen Schritt des Zuordnens eines Identifizierungscodes eines Teils zu einem UWB-Kennzeichen an einem Wagen, wenn das Teil auf dem Wagen bereitgestellt wird, umfassend, wobei der Algorithmus mindestens einen von dem zusammentragenden Roboterarm und/oder dem schweißenden Roboterarm und/oder dem Farbe auftragenden Roboterarm basierend auf dem zugordneten Identifizierungscode und dem UWB-Kennzeichen lenkt.

6. Verfahren nach einem der Ansprüche 1 bis 5, wobei der Algorithmus das Lenken des zusammentragenden Roboterarms, des schweißenden Roboterarms und des Farbe auftragenden Roboterarms optimiert, indem er Schritte ausführt, die Folgendes umfassen: Auftrennen mindestens zweier Gestaltungen in Zusammentrage-, Schweiß- und Farbauftragsaufgaben, Einschätzen, welche Aufgaben kombiniert oder gruppiert werden können, Erzeugen eines Plans für das Lenken der Roboterarbe, basierend auf der Einschätzung.

7. Verfahren nach einem der Ansprüche 1 bis 6, wobei der Algorithmus für die Produktion des Silos notwendige Teile basierend auf der Gestaltung bestimmt, wobei der Algorithmus vorzugsweise Zugang zu einem Lagerbestandssystem hat, das Informationen über Position und Menge verschiedener Teile umfasst.

8. Verfahren nach einem der Ansprüche 1 bis 7, wobei der Algorithmus einen anordnenden Roboterarm lenkt, um geschweißte Teile und/oder Teile mit Farbauftrag für jede Anforderung in separaten Paketen anzuordnen.

9. Verfahren nach Anspruch 8, wobei der Algorithmus die Verwendung unterschiedlicher Teile optimiert und dementsprechend neue Teile anfordert.

10. System für die Produktion von Silos, basierend auf Gestaltungen, Folgendes umfassend: eine Rechenvorrichtung, die dafür konfiguriert ist, einen Algorithmus abzuarbeiten, einen zusammentragenden Roboterarm, der konfiguriert ist, ein oder mehrere Teile, die für die Produktion des Silos notwendig sind, zusammenzutragen, einen schweißenden Roboterarm, der dafür konfiguriert ist, zumindest einige der Teile zusammenzuschweißen, und einen Farbe auftragenden Roboterarm, der dafür konfiguriert ist, zumindest auf einige der Teile Farbe aufzutragen, **dadurch gekennzeichnet, dass** der zusammentragende Roboterarm, der schweißende Roboterarm und der Farbe auftragenden Roboterarm mit der Rechenvorrichtung verbunden und dafür konfiguriert sind, Lenkungen von der Rechenvorrichtung zu folgen, und wobei die Lenkungen dafür konfiguriert sind, durch den Algorithmus optimiert zu werden, wobei das System ferner UWB-Technologie zum Verwalten der Teile ein Echtzeit, mindestens drei Ankervorrichtungen und mindestens ein UWB-Kennzeichen umfasst, das mindestens einem der Teile zugeordnet ist, wobei die Ankervorrichtungen dafür konfiguriert sind, die UWB-Kennzeichen zu erkennen und anhand der Rechenvorrichtung die Position des UWB-Kennzeichens basierend auf den Erkennungen zu bestimmen, und wobei die Rechenvorrichtung dafür konfiguriert ist, den zusammentragenden Roboterarm, den schweißenden Roboterarm oder den Farbe auftragenden Roboterarm basierend auf der Position zu befehligen.

11. System nach Anspruch 10, wobei der Algorithmus dafür konfiguriert ist, das Lenken des zusammentragenden Roboterarms, des schweißenden Roboterarms und des Farbe auftragenden Roboterarms basierend auf Parametern zu optimieren, die den Zufuhrzeitpunt und die Produktionseffizienz umfassen.

12. System nach Anspruch 10 oder 11, wobei das System ferner einen anordnenden Roboterarm umfasst, der dafür konfiguriert ist, geschweißte Teile und/oder Teile mit Farbauftrag für jede Gestaltung separat anzuordnen.

13. System nach einem der Ansprüche 10 bis 12, wobei das System ferner einen beweglichen Wagen umfasst, der dafür konfiguriert ist, unterschiedliche Teile, die für die Produktion des Silos erforderlich sind, zu dem zusammentragenden Roboterarm zu transportieren, wobei der bewegliche Wagen ein Kennzeichen umfasst, das dafür konfiguriert ist, Funkwellen auszusenden.

14. System nach einem der Ansprüche 10 bis 13, wobei das System ferner einen schneidenden Roboterarm umfasst, der dafür konfiguriert ist, ein Metallteil in ein Teil, das für die Gestaltung benötigt wird, und ein Teil, das für die Gestaltung nicht benötigt wird, zu schneiden, und wobei die Rechenvorrichtung dafür konfiguriert ist einzuschätzen, ob das für die Gestaltung nicht benötigte Teil für andere Gestaltungen verwendet werden kann.

15. System nach einem der Ansprüche 10 bis 14, das dafür konfiguriert ist, ein Verfahren nach einem der Ansprüche 1 bis 9 auszuführen.

## Revendications

1. Procédé de production de silos sur la base de modèles à l'aide d'un algorithme, **caractérisé en ce que**, l'algorithme dirige un bras robotisé de collecte pour rassembler une ou plusieurs pièces nécessaires à la production du silo ; et dans lequel l'algorithme dirige un bras robotisé de soudage pour souder au moins certaines des pièces ensemble ; et dans lequel l'algorithme dirige un bras robotisé de peinture pour peindre au moins certaines des pièces ; et dans lequel l'algorithme optimise les instructions pour le bras robotisé de collecte, le bras robotisé de soudage et le bras robotisé de peinture ; dans lequel le procédé utilise en outre une technologie à bande ultra-large (UWB) pour gérer les pièces en temps réel ; dans lequel le procédé comprend en outre une étape au cours de laquelle les pièces sont associées à une ou plusieurs étiquettes à bande ultra-large (UWB), et comprend l'étape de surveillance d'une position de la ou des étiquettes UWB via la technologie UWB, dans lequel l'algorithme dirige au moins l'un parmi le bras robotisé de collecte et/ou le bras robotisé de soudage et/ou le bras robotisé de peinture sur la base de ladite position.

2. Procédé selon la revendication 1, dans lequel le procédé comprend une étape consistant à équiper un chariot mobile d'une ou plusieurs étiquettes UWB, permettant de suivre l'emplacement du chariot mobile.

3. Procédé selon la revendication 1 ou 2, dans lequel le procédé comprend une étape consistant à doter les pièces d'un code d'identification, dans lequel le code d'identification comprend de préférence un code lisible optiquement, de préférence un code QR, lequel code d'identification pouvant comprendre toute donnée relative à la pièce sur laquelle le code d'identification est fourni, dans lequel ledit code d'identification est lu et enregistré à des positions prédéterminées, de préférence au niveau ou à proximité du bras robotisé de collecte et/ou du bras robotisé de soudage et/ou du bras robotisé de peinture.

4. Procédé selon l'une quelconque des revendications 3, dans lequel le procédé comprend une étape où, sur la base des étiquettes UWB, l'emplacement des pièces est déterminé, dans lequel le code d'identification peut être scanné pour obtenir des données scannées, et dans lequel, sur la base des données scannées en combinaison avec l'emplacement des pièces, le bras robotisé de collecte et/ou le bras robotisé de soudage et/ou le bras robotisé de peinture peuvent être commandés pour effectuer une action souhaitée.

5. Procédé selon l'une quelconque des revendications 3 à 4, comprenant une étape d'association d'un code d'identification d'une pièce à une étiquette UWB sur un chariot lorsque ladite pièce est fournie sur ledit chariot, dans lequel l'algorithme dirige au moins l'un parmi le bras robotisé de collecte et/ou le bras robotisé de soudage et/ou le bras robotisé de peinture sur la base dudit code d'identification associé et de l'étiquette UWB.

6. Procédé selon l'une quelconque des revendications 1 à 5, dans lequel l'algorithme optimise les instructions pour le bras robotisé de collecte, le bras robotisé de soudage et le bras robotisé de peinture en effectuant des étapes comprenant : la séparation d'au moins deux modèles dans les tâches d'assemblage, de soudage et de peinture ; l'évaluation des tâches qui peuvent être combinées ou regroupées ; la génération d'une planification pour les instructions pour les bras robotisés sur la base de l'évaluation.

7. Procédé selon l'une quelconque des revendications 1 à 6, dans lequel, l'algorithme détermine les pièces nécessaires à la production du silo sur la base du modèle, de préférence lorsque l'algorithme a accès à un système de stock d'entrepôt, comprenant des informations sur l'emplacement et la quantité des différentes pièces.

8. Procédé selon l'une quelconque des revendications 1 à 7, dans lequel l'algorithme ordonne à un bras robotisé de ranger des pièces soudées et/ou des pièces peintes pour chaque commande dans des paquets séparés.

9. Procédé selon la revendication 8, dans lequel l'algorithme optimise l'utilisation de différentes pièces et commande de nouvelles pièces en conséquence.

10. Système de production de silos à partir de modèles comprenant : un dispositif informatique, configuré pour exécuter un algorithme ; un bras robotisé de collecte, configuré pour rassembler une ou plusieurs pièces nécessaires à la production du silo ; un bras robotisé de soudage, configuré pour souder au moins certaines des pièces ensemble ; et un bras robotisé de peinture, configuré pour peindre au moins certaines des pièces, **caractérisé en ce que**, le bras robotisé de collecte, le bras robotisé de soudage et le bras robotisé de peinture sont reliés au dispositif informatique et sont configurés pour suivre des instructions du dispositif informatique, et dans lequel les instructions sont configurées pour être optimisées par l'algorithme ; dans lequel le système comprend en outre la technologie UWB pour gérer les pièces en temps réel, au moins trois dispositifs d'ancrage et au moins une étiquette UWB associée à au moins l'une des pièces, dans lequel lesdits dispositifs d'ancrage sont configurés pour détecter les étiquettes UWB et déterminer par le dispositif informatique la position de ladite étiquette UWB sur la base desdites détections, et dans lequel ledit dispositif informatique est configuré pour donner des instructions au bras robotisé de collecte, au bras robotisé de soudage et/ou au bras robotisé de peinture sur la base de ladite position.

11. Système selon la revendication 10, dans lequel l'algorithme est configuré pour optimiser les instructions pour le bras robotisé de collecte, le bras robotisé de soudage et le bras robotisé de peinture sur la base de paramètres comprenant le délai de livraison et l'efficacité de la production.

12. Système selon la revendication 10 ou 11, dans lequel le système comprend en outre un bras robotisé de rangement, configuré pour ranger les pièces soudées et/ou les pièces peintes pour chaque modèle séparément.

13. Système selon l'une quelconque des revendications 10 à 12, dans lequel le système comprend en outre un chariot mobile, configuré pour transporter différentes pièces nécessaires à la production du silo vers le bras robotisé de collecte, dans lequel le chariot mobile comprend une étiquette, configurée pour émettre des ondes radio.

14. Système selon l'une quelconque des revendications 10 à 13, dans lequel le système comprend en outre un bras robotisé de découpe, configuré pour découper une pièce métallique en une pièce nécessaire pour le modèle et une pièce non nécessaire pour le modèle, et dans lequel le dispositif informatique est configuré pour évaluer si la pièce non nécessaire pour le modèle peut être utilisée dans d'autres modèles.

15. Système selon l'une quelconque des revendications précédentes 10-14, configuré pour mettre en œuvre un procédé selon l'une quelconque des revendications 1 à 9.
